(19) Europäisches Patentamt
European Patent Office
Office européen des brevets

(11) **EP 3 130 222 B1**

(12) **EUROPÄISCHE PATENTSCHRIFT**

(45) Veröffentlichungstag und Bekanntmachung des Hinweises auf die Patenterteilung:
**27.12.2017 Patentblatt 2017/52**

(51) Int Cl.:
***A01K 1/01*** (2006.01)   ***H02H 7/085*** (2006.01)
***H01M 10/44*** (2006.01)

(21) Anmeldenummer: **16175471.8**

(22) Anmeldetag: **21.06.2016**

(54) **SICHERHEITSABSCHALTUNG EINES RÄUMUNGS- UND/ODER ENTMISTUNGSSCHIEBERS**

SAFETY SHUTDOWN FOR A CLEARING AND/OR DUNG REMOVAL SLIDER

DECONNEXION DE SECURITE D'UN RACLEUR A FUMIER ET/OU DE NETTOYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2015 DE 102015113504**

(43) Veröffentlichungstag der Anmeldung:
**15.02.2017 Patentblatt 2017/07**

(73) Patentinhaber: **Duräumat Stalltechnik GmbH
23858 Reinfeld (DE)**

(72) Erfinder: **Klang, Hans-Joachim
21483 Wangelau (DE)**

(74) Vertreter: **Raffay & Fleck
Patentanwälte
Grosse Bleichen 8
20354 Hamburg (DE)**

(56) Entgegenhaltungen:
**EP-A1- 1 557 082     EP-A2- 0 850 817
WO-A1-2008/003534     CA-C- 2 033 427
DE-A1- 2 018 340**

**Beschreibung**

Die vorliegende Erfindung betrifft ein Verfahren zur Sicherheitsabschaltung eines Räumungs- und/oder Entmistungsschiebers sowie ein System zur Steuerung eines Räum- und/oder Entmistungsschiebers.

Derartige Systeme sind aus dem Stand der Technik bekannt.

Insbesondere ist es bekannt, den Antriebsstrom zu erfassen, der von einem elektrischen Antrieb des Räumungs- und/oder Entmistungsschiebers aufgenommen wird und eine Höchstgrenze für diesen vorzusehen und bei Erreichen oder Überschreiten dieser Höchstgrenze eine Abschaltung oder einen Stopp des Räumungs- und/oder Entmistungsschiebers bzw. des Antriebes vorzunehmen. Dies ist daher sinnvoll, da dadurch Verletzungs- und Beschädigungsrisiken reduziert werden, sofern Hindernisse sich im Laufweg des Räumungs- und/oder Entmistungsschiebers befinden.

Auch ist es bekannt, ein Drehmoment im Antrieb des Räumungs- und/oder Entmistungsschiebers zu erfassen und dies mit einer gespeicherten Drehmomentkurve abzugleichen und bei vorgegebenen Abweichungen eine Abschaltung vorzunehmen, wie dies beispielsweise in der EP 1 557 082 A1 offenbart ist.

Die CA 2 033 427 C offenbart ein Verfahren zur Sicherheitsabschaltung eines Räumungs- und/oder Entmistungsschiebers mit den Merkmalen des Oberbegriffs des Anspruchs 1 sowie ein entsprechendes System mit den Merkmalen des Oberbegriffs des Anspruchs 12.

Die DE 2 018 340 A1 offenbart eine elektrische Steuerung für Entmistungsanlagen mit den Merkmalen des Oberbegriffs des Anspruchs 1 und 12.

Die EP 1 557 082 A1 offenbart eine Einrichtung und ein Verfahren zur Reinigung von Ställen, wobei über einen Drehmomentsensor das am Antrieb wirksame Belastungsdrehmoment des Räumschiebers bestimmt wird. Eine Steuereinrichtung bewirkt ein Abschalten des Antriebes des Räumschiebers, wenn das gemessene Drehmomentsignal einen von einer gespeicherten Drehmomentkurve abweichenden Spitzenwert anzeigt, der einen voreingestellten Schwellwert überschreitet.

Die WO 2008/003534 A1 offenbart ein Verfahren und eine Vorrichtung zum Erkennen eines Kurzschlusses an einer Schaltungsanordnung.

Die EP 0 850 817 A1 offenbart ein Lastkurzschlussfehler-Erfassungsverfahren, bei dem ein Kurzschlussfehler einer Last festgestellt wird, wenn ein Zustand, bei dem ein Laststromerfassungswert einen vorgegebenen Wert innerhalb einer ersten vorgegebenen Zeitperiode überschreitet, eine zweite vorgegebene Zeitperiode andauert.

Aufgabe der vorliegenden Erfindung ist es, die Sicherheitsabschaltung dahingehend zu verbessern, dass zum einen Fehlabschaltungen vermieden und zum anderen eine höhere Erkennungsgenauigkeit von Hindernissen, insbesondere auch

Der Räumungs- und/oder Entmistungsschieber weist einen elektrischen Antrieb auf, wobei der vom elektrischen Antrieb aufgenommene Antriebsstrom erfindungsgemäß erfasst wird. Dies kann beispielsweise durch eine entsprechende Messung des Stromes erfolgen. Genauer wird erfindungsgemäß der Räumungs- und/oder Entmistungsschieber gestoppt und/oder reversiert und/oder der elektrische Antrieb abgeschaltet, gestoppt und/oder reversiert, wenn die Antriebsstrom eine erste Stromgrenze erreicht und/oder überschreitet. Ein solches Vorgehen kann beispielsweise durch Abhalten des Antriebsstromes oder begrenzenden Antriebsstromes erfolgen. Alternativ und/oder zusätzlich ist auch eine Änderung des Antriebsstromes, beispielsweise um eine Richtungsumkehr der Rotationsrichtung des elektrischen Antriebes zu erreichen, möglich.

Erfindungsgemäß ist die erste Stromgrenze zu jedem Zeitpunkt in einem ersten Zeitabschnitt nach dem Anfahren durch einen ersten vorgegebenen Aufschlag auf den um eine erste Zeitspanne zurückliegenden Antriebsstrom zuzüglich einem zweiten Aufschlag bestimmt. Die erste Stromgrenze ist zu jedem Zeitpunkt in einem zweiten Zeitabschnitt erfindungsgemäß durch den ersten vorgegebenen Aufschlag auf den um eine zweite Zeitspanne zurückliegenden Antriebsstrom bestimmt. Dabei ist der zweite Aufschlag so gegeben, dass er mit zunehmendem zeitlichem Abstand vom Anfahren verringert wird. Der erste Zeitabschnitt liegt erfindungsgemäß vom Anfahren aus gesehen zeitlich vor dem zweiten Zeitabschnitt. Der erste Zeitabschnitt und der zweite Zeitabschnitt überlappen nicht.

Ein erster vorgegebener Aufschlag ist dabei nicht zwingend konstant vorgegeben und ist üblicherweise in mA oder in mA/sek. erster Zeitspanne vorgegeben. Dabei kommt es nicht auf die Dimension (milli, kilo,...), sondern allein auf die Angabe als Stromstärke an.

Insbesondere ist der erste Aufschlag pro sek. Zeitspanne konstant, wird also die Zeitspanne im Laufe des ersten Zeitabschnittes beispielsweise verdoppelt, so verdoppelt sich auch der in mA absolut angegebene erste Aufschlag, wenn der erste Aufschlag pro sek. Zeiteinheit konstant bleiben soll.

Es wird somit jeweils ein Abgleich des aktuellen elektrischen Antriebsstromes mit dem um eine erste Zeitspanne zurückliegenden Antriebsstrom durchgeführt, wobei auf den zurückliegenden Antriebsstrom ein erster und ein zweiter Aufschlag getätigt wird, bevor der Vergleich durchgeführt wird. Sind der zurückliegende elektrische Antriebsstrom zuzüglich der Aufschläge kleiner oder gleich dem aktuellen elektrischen Antriebsstrom, wird gestoppt bzw. abgeschaltet und/oder reversiert. Dabei wird im ersten Zeitabschnitt, der vom Anfahren aus gesehen zeitlich vor dem zweiten Zeitabschnitt liegt, nicht nur ein erster vorgegebener Aufschlag, sondern auch ein zweiter vorgegebener Aufschlag auf den zurückliegenden Antriebsstrom aufgeschlagen, bevor ein solcher Vergleich durchgeführt wird. Auch der zweite Aufschlag muss nicht konstant sein und wird ebenfalls üblicherweise in mA oder mA/sek. erster Zeitspanne angegeben.

In dem zweiten Zeitabschnitt, der zeitlich nach dem ersten Zeitabschnitt liegt, betrachtet zeitlich gesehen vom Anfahren aus, wird lediglich ein erster Aufschlag getätigt. Durch eine solche Ausgestaltung, bei der in unterschiedlichen Zeitabschnitten unterschiedliche Aufschläge getätigt werden, kann der Besonderheit des Anfahrtvorganges Rechnung getragen werden, ohne die für die Besonderheiten notwendigen Parameter auch auf den restlichen Verlauf anwenden zu müssen. Dadurch, dass ein Vergleich mit einem zurückliegenden Antriebsstrom durchgeführt wird, kann auch einem kontinuierlichen Anstieg des zu schiebenden Materials vor dem Räumungs- und/oder Entmistungsschieber Rechnung getragen werden, wobei auch Phasen ohne oder mit geringerem Materialanstieg unproblematisch behandelt werden können. Wird jedoch ein plötzlicher Materialanstieg, beispielsweise durch ein Hindernis, wie beispielsweise ein Tier durch das Fortschreiten des Räumungs- und/oder Entmistungsschiebers oder ein anderes Ereignis, wie beispielsweise das Laufen eines Tieres vor den Räumungs- und/oder Entmistungsschieber, bewirkt, kann dies durch einen Vergleich mit einem davorliegenden Antriebsstrom vergleichsweise unproblematisch und weitgehend unabhängig von der absoluten Last bzw. dem absoluten Antriebsstrom durch den erfindungsgemäßen Vergleich erkannt werden.

Dabei ist ein solches Erkennen auch im Bereich des Anfahrens oder kurz nach dem Anfahren, trotz den Besonderheiten dieser Fahrtphase möglich.

Die ersten und zweiten Zeitspannen sowie die ersten und zweiten Aufschläge sind dabei abhängig von der Art und Ausgestaltung des Räumungs- und/oder Entmistungsschiebers sowie des elektrischen Antriebes und/oder der gesamten Räumungs- und/oder Entmistungsanlage. Generell sollten sie so bestimmt sein, dass Hindernisse mit ausreichender Sicherheit und Schnelligkeit erkannt werden können, jedoch keine oder nur wenige Falschabschaltungen auftreten. Dazu lassen sich besonders bevorzugte Werte angeben, wie dies im nachfolgenden Text der Fall ist. Prinzipiell liegen die ersten und zweiten Zeitspannen insbesondere zwischen 0,05 sek. und 10 sek. sowie die Aufschläge im Bereich von Bruchteilen eines mA bis hin zu 25% des maximal vorgesehenen Antriebsstromes, insbesondere pro 0,1 Sekunden Zeitspanne.

Prinzipiell kann insbesondere der erste Aufschlag durch einen Anwender oder Installateur in einem entsprechenden und/oder erfindungsgemäßen System, das das Verfahren umsetzt oder auch an sich als Teil des Verfahrens vorgegeben bzw. geändert werden, insbesondere in den als vorteilhaft beschriebenen Spannen. Eine solche Änderung durch eingreifen in die Vorgaben wird nicht als Abweichung von einem konstanten Wert angesehen. Auch kann beispielsweise ein Faktor und/oder Summand veränderlich vorgegeben werden, mit dem ein zeit- und/oder ortsabhängiger Aufschlag zu multiplizieren und/oder zu erhöhen ist Dem entgegen ist vorteilhafterweise der zweite Aufschlag zwar nicht an sich konstant, aber fest vorgegeben, in einem entsprechenden und/oder erfindungsgemäßen System vorteilhafterweise unveränderlich, insbesondere in einem Speicher, abgelegt. Unveränderlich ist dieser selbstverständlich nicht durch eine Neuprogrammierung, sondern allein für den Anwender und/oder Installateur.

Mit besonderem Vorteil ist der erste Aufschlag ein konstanter Aufschlag und/oder mit der Zeit abnehmender Aufschlag. Prinzipiell ist der erste Aufschlag in Abhängigkeit der erwarteten Zunahme der Last bzw. der Materialmenge vor dem Räumungs- und Entmistungsschieber bzw. dem dadurch bewirkten Stromanstieg abhängig zu wählen. Dieser ist nach einem Zeitabschnitt des Anfahrens üblicherweise als konstant zunehmend anzunehmen, was zu einem konstanten Aufschlag führen würde. In besonderen Ausgestaltungen oder aufgrund der Motorcharakteristik kann sich jedoch auch eine bei konstanter Materialzunahme abnehmender Antriebsstromzunahme ergeben, so dass mit einem über die Zeit abnehmenden ersten Aufschlag gearbeitet werden kann. Besondere Ausgestaltungen, die beispielsweise Bereiche, die vom Räumungs- und/oder Entmistungsschieber überstrichen werden, die beispielsweise üblicherweise abweichende Materialmengen und/oder höhere Antriebsströme oder Antriebsstromzunahmen, beispielsweise auf Grund von erhöhter Reibung, aufweisen, können auch zu einem zeitlichen und/oder vom Ort abhängigen ersten und/oder zweiten Aufschlag führen. Dazu wird insbesondere die Position des Räumungs- und/oder Entmistungsschiebers erfasst und so der jeweils für Ort und/oder Zeit vorgegebene Aufschlag bzw. erster und/oder zweiter Aufschlag gewählt und/oder bestimmt. Darüber lassen sich Besonderheiten einer Anlage besonders gut abbilden.

Mit besonderem Vorteil ist zwischen dem Anfahren, also dem Beginn des Anfahrens, also insbesondere aus dem Stand auf der einen Seite und dem Beginn des ersten Zeitabschnittes auf der anderen Seite ein Anfahrtszeitabschnitt vorgesehen. In einem solchen Fall erstreckt sich insbesondere vom Beginn des Anfahrens aus der Anfahrtszeitabschnitt und schließt insbesondere an diesen unmittelbar der erste Zeitabschnitt an. Die erste Stromgrenze ist im Anfahrtszeitabschnitt insbesondere durch eine konstante Anfahrtsstromgrenze bestimmt. Mit besonderem Vorteil ist der Anfahrtszeitabschnitt mindestens 0,1 sek. und/oder maximal 1,5 sek. lang ausgestaltet. In einer ersten Phase nach dem oder ab dem Anfahren des Räumungs- und/oder Entmistungsschiebers ist nicht nur die Strommessung schwierig, da der Strom sich hier stark verändert, sondern ist auch in der Regel ein vergleichsweise sehr hoher Antriebsstrom notwendig, so dass sich hier ein Vergleich mit einem zurückliegenden Antriebsstrom nur bedingt anbietet und sich in vielen Fällen das Vorsehen einer konstanten Anfahrtsstromgrenze als vorteilhaft erwiesen hat. Bei einer üblicherweise maximalen Höchstgeschwindigkeit von bis zu sechs Meter pro Sekunde wird in einem solchen Anfahrtabschnitt auch nur ein sehr geringer Weg vom Räumungs- und/oder Entmistungsschieber zurück gelegt, sodass das Gefährdungspotenzial gering bleibt. Die Anfahrtsstromgrenze wird dabei insbesondere im Bereich von 80-150% des maximalen Antriebsstromes oder des maximal vorgesehenen Antriebsstromes und/oder der Höchststromgrenze angesetzt. Dabei ist der maximale Antriebsstrom gegeben durch den maximalen Antriebsstrom, der vom elektrischen Antrieb, insbesondere dauerhaft, verkraftet wird, ohne dass dieser Schaden nimmt und/oder dadurch vorgegeben, dass es der maximale Antriebsstrom ist, bei dem die Anlage an sich keinen Schaden nimmt. Alternativ kann die Anfahrtsstromgrenze dadurch bestimmt werden, dass in mehreren Anfahrtsversuchen ein maximaler Anfahrtsstrom bestimmt wird und auf diesen ein Aufschlag von 1-25% getätigt wird, um die Anfahrtsstromgrenze zu bestimmen.

Mit besonderem Vorteil wird der Räumungs- und/oder Entmistungsschieber auch gestoppt und/oder reversiert und/oder der elektrische Antrieb abgeschaltet, gestoppt und/oder reversiert, wenn der Antriebsstrom eine, insbesondere konstante, in jedem Fall aber zeitunabhängige, gegebenenfalls ortsabhängige Höchststromgrenze erreicht und/oder überschreitet. Ein solches zusätzliches Vorsehen einer Höchststromgrenze kann die Sicherheit der Abschaltung weiter erhöhen und auch bei besonders starken Hindernissen in manchen Fällen eine schnellere Abschaltung gewährleisten, als dies durch die erste Stromgrenze realisiert werden kann, ohne zu zahlreichen Fehlabschaltungen zu gelangen.

Eine solche Höchststromgrenze kann beispielsweise auch durch Versuche oder Erfahrungswerte ermittelt werden und beinhaltet insbesondere auch einen Aufschlag von 1-25% auf derartige Werte. Insbesondere können Höchststromgrenze und Anfahrtsstromgrenze identisch gewählt werden.

Mit besonderem Vorteil beträgt der erste Aufschlag mindestens 0,3 mA pro 0,1 sek. Zeitspanne (je nach Zeitabschnitt erster oder zweiter Zeitspanne) und/oder maximal 300 mA pro 0,1 sek. Zeitspanne. Besonders bevorzugt werden jedoch mindestens 5 mA pro 0,1 sek. Zeitspanne und/oder maximal 150 mA pro 0,1 sek. Zeitspanne. Wird die Zeitspanne beispielsweise mit 0,2 sek. angenommen, so sind die vorteilhaften Grenzen der Aufschläge entsprechend zu errechnen.

Mit besonderem Vorteil ist der erste Aufschlag pro 0,1 sek. Zeitspanne mit mindestens 0,03% und/oder maximal 25% des maximal vorgesehenen Antriebsstromes und/oder des Maximalstromes des elektrischen Antriebes oder der Anfahrtsstromgrenze und/oder der Höchststromgrenze gewählt. Besonders bevorzugt werden Mindestwerte von 0,1% und/oder Maximalwerte von 5%.

Derartige Werte haben eine besonders zuverlässige Abschaltung bei geringer Anzahl von Fehlabschaltungen bewiesen.

Mit besonderem Vorteil beträgt der zweite Aufschlag zu Beginn des ersten Zeitabschnittes pro 0,1 sek. Zeitspanne mindestens 75 mA und/oder maximal 700 mA und/oder mindestens 8% und/oder maximal 40% des maximal vorgesehenen Antriebsstromes und/oder des Maximalstromes des elektrischen Antriebes und/oder der Anfahrtsstromgrenze und/oder der Höchststromgrenze. Insbesondere fällt der zweite Aufschlag, insbesondere auch pro sek. Zeitspanne, über den Verlauf des ersten Zeitabschnittes ab. Insbesondere beträgt der zweite Aufschlag zum Ende des ersten Zeitabschnittes pro 0,1 sek. Zeitspanne maximal 50 mA und/oder maximal 2% des maximal vorgesehenen Antriebsstromes und/oder des Maximalstromes des elektrischen Antriebs und/oder der Anfahrtsstromgrenze und/oder der Höchststromgrenze. Insbesondere beträgt der zweite Aufschlag zum Ende des ersten Zeitabschnittes maximal 10% des zweiten Aufschlages zu Beginn des ersten Zeitabschnittes.

Durch eine solche Ausgestaltung kann der Besonderheit der Zeit nach Beginn des Anfahrens, insbesondere der Zeit nach einem Anfahrtszeitabschnitt, besonders gut Rechnung getragen werden und dadurch eine hohe Erkennungsgenauigkeit und -schnelligkeit von Hindernissen erreicht werden, ohne die Anzahl der Fehlabschaltungen zu erhöhen.

Mit besonderem Vorteil ist der erste Aufschlag unabhängig vom zweiten Aufschlag und/oder der Zeit und/oder dem zeitlichen Abstand von Anfahren und/oder dem Antriebsstrom und/oder der zweite Aufschlag unabhängig vom ersten Aufschlag und/oder dem Antriebsstrom.

Durch eine solche Ausgestaltung der Aufschläge, insbesondere der Unabhängigkeit des ersten Aufschlages vom zweiten Aufschlag und der Zeit bzw. dem zeitlichen Abstand vom Anfahren sowie dem Antriebsstrom ist eine besonders zuverlässige Abschaltung möglich. Wird der zweite Aufschlag unabhängig vom ersten Aufschlag und/oder vom Antriebsstrom ausgeschaltet, ermöglicht dies eine besonders genaue Erkennung auch im frühen Zeitbereich, also im ersten Zeitabschnitt. Beide Aufschläge, also erster und zweiter Aufschlag können jedoch von der Position bzw. des Ortes auf der Räumspur des Räumungs- und/oder Entmistungsschiebers abhängig gemacht werden, insbesondere wenn dies durch Besonderheiten der Anordnung oder der Nutzung des Räumungs- und/oder Entmistungsschiebers sinnvoll ist, insbesondere wenn die Räumspur ortsabhängige Unterschiede aufweist bzw. die das auf der Räumspur anzutreffende Material üblicherweise ortsabhängige Unterschiede in Art und/oder Verteilung bzw. Dichte aufweist.

Mit besonderem Vorteil beginnt der erste Abschnitt spätestens nach zwei Sekunden nach dem Anfahren, also spätestens nach zwei Sekunden nach dem Beginn des Anfahrens und insbesondere frühestens nach 0,1 sek. nach dem Anfahren. Besonders bevorzugt beginnt der erste Abschnitt spätestens nach einer Sekunde ab Beginn des Anfahrens und/oder frühestens nach 0,4 sek. ab Beginn des Anfahrens.

Mit besonderem Vorteil schließt sich der zweite Zeitabschnitt unmittelbar an den ersten Zeitabschnitt an.

Durch eine solche Ausgestaltung kann ebenfalls eine besonders zuverlässige Abschaltung bei geringer Fehleranzahl realisiert werden.

Mit besonderem Vorteil endet der zweite Zeitabschnitt nach einem Anhalten und/oder Unterschreiten einer vorgegebenen Mindestgeschwindigkeit, beispielsweise von 0,1 m/min. des Räumungs- und/oder Entmistungsschiebers. Mit besonderem Vorteil beginnt danach erneut ein Anfahrvorgang, wird insbesondere zunächst ein Anfahrtszeitabschnitt gestartet und/oder direkt oder nach einer entsprechenden Wartezeit der erste Zeitabschnitt erneut begonnen.

Mit besonderem Vorteil dauert der erste Zeitabschnitt mindestens eine Sekunde und/oder maximal sechs Sekunden an. Mit besonderem Vorteil dauert der erste Zeitabschnitt mindestens zwei Sekunden und/oder maximal vier Sekunden an.

Mit besonderem Vorteil beträgt der erste Aufschlag zu Beginn des zweiten Zeitabschnitts 90-120% des ersten und zweiten Aufschlages zusammen zum Ende des ersten Zeitabschnittes. Diese Aussagen gelten insbesondere für einen Aufschlag in mA/sek. Zeitspanne.

Dadurch kann ein besonders nahtloses Anschließen des ersten und zweiten Zeitabschnittes aneinander, insbesondere wenn diese auch zeitlich aneinandergrenzend, gewährleistet werden.

Mit besonderem Vorteil wird der zweite Aufschlag durch einen mit der Zeit abnehmenden Faktor auf den ersten Abschlag bestimmt, wobei insbesondere der Faktor am Anfang der ersten Zeitspanne mindestens drei und/oder maximal 20 beträgt und/oder am Ende der ersten Zeitspanne mindestens 0,9, insbesondere mindestens 1, beträgt.

Durch eine solche Ausgestaltung kann bei Veränderung des ersten Aufschlages automatisch eine entsprechende Anpassung des zweiten Aufschlages durch den gewählten Faktor erfolgen.

So ist in bestimmten Fällen eine Anpassung des Verfahrens auf verschiedene Räumungs- und Entmistungsschieber bzw. Anlagen auf besonders einfache Art und Weise möglich.

Mit besonderem Vorteil weist der erste Zeitabschnitt zu ihrem Beginn eine Startzeitspanne auf, in der der zweite Aufschlag stärker als quadratisch fällt. Insbesondere kann der zweite Aufschlag in dieser Startphase nach der Formel

$$\text{zweiter Aufschlag} = ((t_{ab\ Anfahren} - K1)^{K2})/K3 + K4$$

Durch eine solche Berechnung kann ein besonders vorteilhafter Verlauf des zweiten Aufschlages in einer Startzeitspanne gewährleistet werden. Dabei sind auch Abweichungen von +/- 10% von dem errechneten zweiten Aufschlag ebenso oder nahezu ebenso vorteilhaft wie der durch diese Formel errechnete zweite Aufschlag. Insbesondere beträgt die zweite Konstante K2 6-10, insbesondere 7-9. Insbesondere ist die erste Konstante K1 mit 150-300% der Zeit bis zum Ende der Starzeitspanne gewählt, insbesondere ist diese erste Konstante so gewählt, dass der zweite Aufschlag bis zum Ende der Startzeitspanne abfällt.

Mit besonderem Vorteil weist der erste Zeitabschnitt eine Endzeitspanne, insbesondere angrenzend an die Startzeitspanne auf, in der der zweite Aufschlag linear degressiv von der Zeit seit dem Anfahren abfällt. Auch Abweichungen von + /- 10% sind nahezu unschädlich bezogen auf den zweiten Aufschlag. Insbesondere beträgt der zweite Aufschlag und betragen insbesondere der erste und zweite Aufschlag zusammen am Ende der Startzeitspanne 90 - 120 % des zweiten Aufschlages, insbesondere der Summe von ersten und zweitem Aufschlag am Beginn der Endzeitspanne.

Mit besonderem Vorteil dauert die Startzeitspanne mindestens 0,5 sek. oder maximal 3 sek. an, insbesondere wird ein minimales Andauern von 0,7 und/oder maximal 1,4 sek. bevorzugt.

Mit besonderem Vorteil beträgt die erste Zeitspanne mindestens 0,5 sek. und/oder maximal 3 sek. Insbesondere bevorzugt wird eine erste Zeitspanne von mindestens 0,1 und/oder maximal 1 sek.. Insbesondere steigt die erste Zeitspanne mit zunehmender Zeit seit dem Anfahren an. Insbesondere steigt sie vom Beginn des ersten Zeitabschnittes bis zu dessen Ende mindestens um den Faktor 2 und/oder mindestens 0,2 sek. an. Mit besonderem Vorteil steigt die erste Zeitspanne mindestens um den Faktor 3 und/oder maximal um den Faktor 5 an, insbesondere mindestens um 0,3 sek. und/oder maximal um 0,6 sek.

Dadurch kann der Besonderheit der kurz nach dem Anfahren liegenden Zeit besonders gut Rechnung getragen werden.

Mit besonderem Vorteil ist die zweite Zeitspanne größer als und/oder gleich der größten ersten Zeitspanne und/oder mindestens 0,1 sek. und/oder maximal 1 sek lang.

Mit besonderem Vorteil beträgt die zweite Zeitspanne mindestens 0,1 sek. und/oder maximal 10 sek.

Insbesondere ist die größte zweite Zeitspanne mindestens um 0,2 sek. größer als die größte erste Zeitspanne.

Mit besonderem Vorteil beträgt die zweite Zeitspanne mindestens 0,2 sek. und/oder maximal 5 sek.

Mit besonderem Vorteil beträgt die zweite Zeitspanne nach maximal 10 sek. ab Beginn des Anfahrens und/oder mindestens 5 sek. nach dem Anfahren mindestens 2 sek und/oder maximal 5 sek..

Mit besonderem Vorteil steigt die zweite Zeitspanne mit zunehmender Zeit seit dem Anfahren an und/oder steigt sie zunächst an, bis sie einen Maximalwert erreicht, von dem an sie konstant bleibt. Mit besonderem Vorteil steigt sie mindestens um den Faktor 4 und/oder mindestens um 1 sek. an.

Gelöst wird die Aufgabe auch durch ein System zur Steuerung eines Räumungs- und/oder Entmistungsschiebers aufweisend mindestens einen elektrischen Antrieb, wobei das System eine Ansteuerung für den elektrischen Antrieb und eine Messvorrichtung zur Erfassung des vom elektrischen Antrieb aufgenommenen Antriebsstroms aufweist. Dabei kann die Messvorrichtung auch Teil der Ansteuerung des elektrischen Antriebs sein. Das System ist dabei eingerichtet, den Antriebsstrom zu ändern und/oder zu begrenzen, so dass der Räumungs- und/oder Entmistungsschieber gestoppt oder reversiert wird und/oder den Räumungs- und/oder Entmistungsschieber zu stoppen und/oder zu reversieren und/oder den elektrischen Antrieb abzuschalten, zu stoppen und/oder zu reversieren, wenn der Antriebsstrom eine erste Stromgrenze erreicht und/oder überschreitet. Dabei ist die erste Stromgrenze zu jedem Zeitpunkt in einem ersten Zeitabschnitt nach dem Anfahren durch einen ersten vorgegebenen Aufschlag auf den um eine erste Zeitabspanne zurückliegenden Antriebsstrom zuzüglich einem zweiten Aufschlag gegeben. Zu jedem Zeitpunkt in einem zweiten Zeitabschnitt ist die erste Stromgrenze durch den ersten vorgegebenen Aufschlag auf den um eine zweite Zeitspanne zurückliegenden Antriebsstrom gegeben. Erfindungsgemäß ist der zweite Aufschlag mit zunehmenden zeitlichen Abstand vom Anfahren verringert.

Alle Ausführungen in Bezug auf übereinstimmende Elemente und Merkmale, insbesondere auf die Zeitabschnitte, Zeitspannen und Aufschläge sowie weitere Stromgrenzen und Zeitabschnitte, wie sie oben in Bezug auf das Verfahren ausgeführt wurden, gelten analog für das System und können hier entsprechend umgesetzt werden, insbesondere durch entsprechende Ausbildung der Ansteuerung. Darüber hinaus kann das System auch weitere Elemente, wie beispielsweise ein Element zur Positionsbestimmung des Räumungs- und/oder Entmistungsschiebers auf der Räumspur des Räumungs- und/oder Entmistungsschiebers aufweisen, beispielsweise um Aufschläge auch positionsabhängig zu bestimmen. Insbesondere ist die Ansteuerung auch eingerichtet, vorgegebene Zeitspannen und Zeitabschnitte sowie Aufschläge zu speichern und/oder zu berechnen. Insbesondere weist die Ansteuerung oder das System auch eine entsprechende Zeitmessvorrichtung zur Bestimmung der Zeit ab dem Anfahren auf. Insbesondere ist die Ansteuerung auch eingerichtet ein Stoppen oder ein Unterschreiten einer Mindestgeschwindigkeit, insbesondere wie oben ausgeführt, zu erkennen und insbesondere ein Anfahren zu erkennen. Insbesondere ist das System und insbesondere die Ansteuerung so eingerichtet, dass es bzw. sie zum Ausführen eines erfindungsgemäßen Verfahrens eingerichtet ist.

Insbesondere weist das System auch eine Anzeige und/oder Eingabevorrichtung auf. Insbesondere ist die Eingabevorrichtung so eingerichtet, dass ein erster Aufschlag eingegeben bzw. verändert werden kann. Mit besonderen Vorteil ist die Eingabevorrichtung auch eingerichtet um eine Anfahrtsstromgrenze und/oder eine Höchststromgrenze einzugeben und/oder zu verändern.

Darüber hinaus weist das System insbesondere eine Warnvorrichtung auf, die beim Anfahren bzw. vor dem Anfahren des Räumungs- und/oder Entmistungsschiebers angesteuert wird, um ein entsprechendes Warnsignal abzugeben.

Darüber hinaus weist das System insbesondere eine Benachrichtigungsvorrichtung auf, die zur Benachrichtigung bei einem Erreichen und/oder Überschreiten der ersten Stromgrenze und/oder der Höchststromgrenze eine Benachrichtigung durchführt, beispielsweise durch eine akustische, optische oder elektronische Meldung, beispielsweise per Email, oder SMS.

Insbesondere weist das System eine Vorrichtung zur Speicherung von Daten, die im Zusammenhang mit dem Überschreiten einer solchen Grenze stehen, auf. Dies ist sinnvoll um möglicherweise eine Anpassung der Zeitabschnitte, Zeitspannen oder Aufschläge durchzuführen und dies auf alten Werten zu basieren. Hier können insbesondere die aufgetretenen Stromverläufe vor und während des Erreichens bzw. Überschreitens von Stromgrenzen abgespeichert werden.

Weitere Vorteile und mögliche Ausführungen sollen rein beispielhaft und nicht beschränkend anhand der nachfolgenden Figuren erläutert werden. Dabei sind die Figuren ebenfalls rein beispielhaft und schematisch sowie nicht beschränkend.

Die Figuren zeigen im Einzelnen:

Fig. 1     eine Darstellung eines erfassten Antriebsstromes sowie einer ersten Stromgrenze und einer Höchststromgrenze; und

Fig. 2     eine Darstellung eines gemessenen Antriebsstroms und einer ersten Stromgrenze sowie einer Höchststromgrenze.

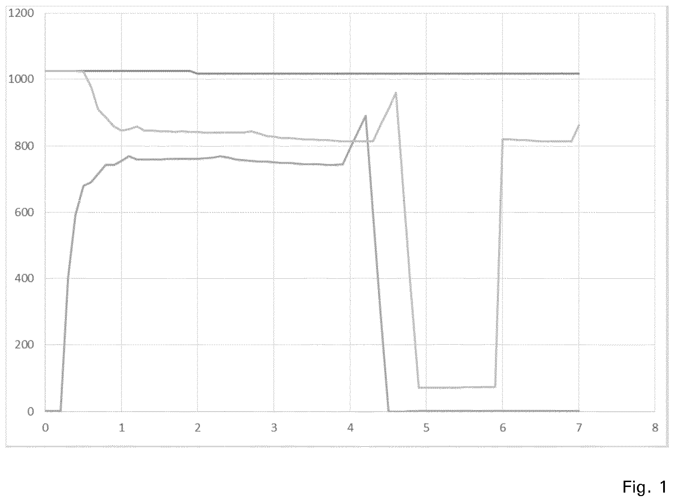

Fig. 1 zeigt ein Diagramm, bei dem auf der X-Achse die Zeit dargestellt ist. Das Anfahren des Räumungs- und/oder Entmistungsschiebers beginnt kurz nach dem Zeitbeginn der X-Achse. Auf der Y-Achse dargestellt ist der Strom. Gezeigt sind drei Kurven. Die zu Beginn unterste Kurve zeigt den gemessenen Antriebsstrom. Die weitgehend parallel verlaufende und überwiegend darüber angeordnete Kurve zeigt eine erste Stromgrenze. Die oberste Kurve zeigt eine Höchststromgrenze. Zu erkennen ist, dass in einem ersten Bereich, etwa bis zur ersten Sekunde auf der X-Achse vom Anfahren aus gesehen ein erster Zeitabschnitt liegt, in dem die Stromgrenze zwar vergleichsweise hoch liegt, jedoch mit der Zeit stark abfällt. Daran schließt sich der zweite Zeitabschnitt an, in dem die erste Stromgrenze im Vergleich zum gemessenen Strom zeitversetzt und leicht erhöht verläuft. Daraus ist sowohl die zweite Zeitspanne als auch der zweite plus erste Aufschlag abzulesen. An dem Punkt, an dem die untere Kurve des gemessenen Antriebsstromes die erste Stromgrenze schneidet, würde erfindungsgemäß eine Abschaltung stattfinden. Zur Veranschaulichung wurde diese hier jedoch nicht durchgeführt, um den weiteren theoretischen Verlauf der Kurve zu verdeutlichen. Dennoch fällt der Strom nach eine Spitze zunächst deutlich ab. Dies kann einem seitlichen Abwerfen eines Hindernisses geschuldet sein.

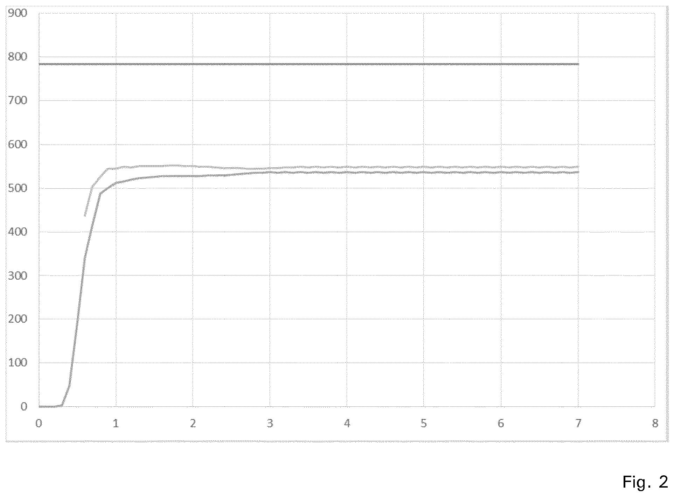

Fig. 2 zeigt eine ähnliche Darstellung für andere Parameter, dargestellt auf der X-Achse ist wieder die Zeit. Ein Anfahren erfolgt ungefähr bei 0,1 sek. Auf der Y-Achse dargestellt ist eine Stromstärke. Gezeigt sind wieder drei Kurven, die untere Kurve zeigt einen erfassten Antriebsstrom. Die darüber liegende Kurve zeigt eine erste Stromgrenze und die oberste Kurve eine Höchststromgrenze. Der erste Zeitabschnitt beginnt mit Beginn der mittleren Kurve, etwa bei 0,6 sek. und erstreckt sich bis zur Sekunde 3. Zu erkennen ist hier auch eine Startzeitspanne des ersten Zeitabschnitts, die sich in etwa von Sekunde 0,6 bis Sekunde 1,4 erstreckt. Hier fällt der zweite Aufschlag stärker als quadratisch ab. Darüber hinaus weist der erste Zeitabschnitt, an den Startzeitabschnitt angrenzend eine Endzeitspanne auf, in dem der zweite Aufschlag linear abfällt. Der erste Aufschlag ist über den gesamten Verlauf konstant gewählt. Ab Sekunde 3 schließt sich der zweite Zeitabschnitt mit allein dem ersten konstanten Aufschlag an. Würde der gemessene Antriebsstrom nun, aufgrund eines Hindernisses stark ansteigen, würde er die erste Stromgrenze berühren und/oder schneiden und es würde eine Abschaltung durchgeführt.

## Patentansprüche

1. Verfahren zur Sicherheitsabschaltung eines Räumungs- und/oder Entmistungsschiebers bei und nach einem Anfahren des Räumungs- und/oder Entmistungsschiebers aufweisend mindestens einen elektrischen Antrieb, wobei der vom elektrischen Antrieb aufgenommene Antriebsstrom erfasst wird, wobei der Räumungs- und/oder Entmistungsschieber gestoppt und/oder reversiert und/oder der elektrische Antrieb abgeschaltet, gestoppt und/oder reversiert wird, wenn der Antriebsstrom eine erste Stromgrenze erreicht und/oder überschreitet, wobei sich die erste Stromgrenze
zu jedem Zeitpunkt in einem ersten Zeitabschnitt nach dem Anfahren durch einen ersten vorgegeben Aufschlag auf den um eine erste Zeitspanne zurückliegenden Antriebsstrom zuzüglich einem zweiten Aufschlag bestimmt und zu jedem Zeitpunkt in einem zweiten Zeitabschnitt durch den ersten vorgegebenen Aufschlag auf den um eine zweite Zeitspanne zurückliegenden Antriebsstrom bestimmt, **dadurch gekennzeichnet, dass** der zweite Aufschlag mit zunehmendem zeitlichen Abstand vom Anfahren verringert wird und wobei der erste Zeitabschnitt vom Anfahren aus zeitlich vor dem zweitem Zeitabschnitt liegt.

2. Verfahren nach Anspruch 1, wobei der erste Aufschlag ein konstanter Aufschlag und/oder mit der Zeit abnehmender ist.

3. Verfahren nach einem der vorstehenden Ansprüche, wobei sich zwischen dem Anfahren und dem Beginn des ersten Zeitabschnitts ein Anfahrtszeitabschnitt erstreckt, wobei die erste Stromgrenze im Anfahrtszeitabschnitt insbesondere durch eine konstante Anfahrtsstromgrenze bestimmt wird und/oder der Anfahrtszeitabschnitt mindestens 0,1 Sekunde und/oder maximal 1,5 Sekunden lang ist.

4. Verfahren nach einem der vorstehenden Ansprüche, wobei der Räumungs- und/oder Entmistungsschieber auch gestoppt und/oder reversiert und/oder der elektrische Antrieb abgeschaltet, gestoppt und/oder reversiert wird, wenn der Antriebsstrom eine konstante Höchststromgrenze erreicht und/oder überschreitet.

5. Verfahren nach einem der vorstehenden Ansprüche, wobei der erste Aufschlag mindestens 0,3 mA pro 0,1 Sekunden Zeitspanne und/oder maximal 300mA pro 0,1 Sekunden Zeitspanne und/oder pro 0,1 Sekunden Zeitspanne mindestens 0,03% und/oder maximal 25% des maximal vorgesehen Antriebsstroms und/oder des Maximalstroms des elektrischen Antriebs und/oder der Anfahrtsstromgrenze und/oder der Höchststromgrenze beträgt.

6. Verfahren nach einem der vorstehenden Ansprüche, wobei der zweite Aufschlag zu Beginn des ersten Zeitabschnitts pro 0,1 Sekunden Zeitspanne mindestens 75 mA und/oder maximal 700mA und/oder mindestens 8% und/oder maximal 40% des maximal vorgesehen Antriebsstroms und/oder des Maximalstroms des elektrischen Antriebs und/oder der Anfahrtsstromgrenze und/oder der Höchststromgrenze beträgt und/oder zum Ende des ersten Zeitabschnitts pro 0,1 Sekunden Zeitspanne maximal 50mA und/oder maximal 2% des maximal vorgesehen Antriebsstroms und/oder des Maximalstroms des elektrischen Antriebs und/oder der Anfahrtsstromgrenze und/oder der Höchststromgrenze beträgt und/oder maximal 10% des zweiten Aufschlags zu Beginn des ersten Zeitabschnitts beträgt.

7. Verfahren nach einem der vorstehenden Ansprüche, wobei der erste Aufschlag unabhängig vom zweiten Aufschlag und/oder der Zeit und/oder dem zeitlichen Abstand vom Anfahren und/oder dem Antriebsstrom ist und/oder der zweite Aufschlag unabhängig vom ersten Aufschlag und/oder dem Antriebsstrom ist.

8. Verfahren nach einem der vorstehenden Ansprüche, wobei der erster Zeitabschnitt spätestens nach 2 Sekunden nach dem Anfahren beginnt und insbesondere frühestens nach 0,1 Sekunden nach dem Anfahren beginnt und/oder sich insbesondere der zweite Zeitabschnitt unmittelbar an den ersten Zeitabschnitt anschließt und/oder der zweite Zeitabschnitt nach einem Anhalten und/oder Unterschreiten einer vorgegebenen Mindestgeschwindigkeit des Räumungs- und/oder Entmistungsschiebers endet und/oder der erste Zeitabschnitt mindestens eine Sekunde und/oder maximal 6 Sekunden andauert.

9. Verfahren nach einem der vorstehenden Ansprüche, wobei sich der zweite Aufschlag durch einen mit der Zeit abnehmenden Faktor auf den ersten Abschlag bestimmt wird, wobei insbesondere der Faktor am Anfang der ersten Zeitspanne mindestens 3 und/oder maximal 20 beträgt und/oder am Ende der ersten Zeitpanne mindestens 0,9 beträgt.

10. Verfahren nach einem der vorstehenden Ansprüche, wobei die erste Zeitspanne
zu ihrem Beginn eine Startzeitspanne aufweist, in der der zweite Aufschlag stärker als quadratisch fällt, insbesondere sich nach der Formel zweiter Aufschlag ist gleich Zeit seit dem Anfahren abzüglich einer ersten Konstante, dies hoch einer zweiten Konstanten zwischen von 6 bis 10, dies dividiert durch eine dritte Konstante, dies zuzüglich einer vierten Konstante, wobei die erste Konstante 150% bis 300% der Zeit bis zum Ende der Startzeitspanne beträgt und/oder die erste Zeitspanne eine Endzeitspanne, insbesondere an ihrem Ende, aufweist, in der zweite Aufschlag linear degressiv von der Zeit seit dem Anfahren und insbesondere die Startzeitspanne mindestens 0,5 Sekunden und/oder maximal 3 Sekunden andauert.

11. Verfahren nach einem der vorstehenden Ansprüche, wobei die erste Zeitspanne mindestens 0,05 Sekunden und/oder maximal 3 Sekunden beträgt und insbesondere mit zunehmender Zeit seit dem Anfahren ansteigt, insbesondere mindestens um den Faktor 2 und/oder mindestens 0,2 Sekunden und/oder die zweite Zeitspanne größer und/oder gleich ist als/wie die größte erste Zeitspanne und/oder mindestens 0,1 Sekunden und/oder maximal 10 Sekunden beträgt, insbesondere nach maximal 10 Sekunden und/oder mindestens 5 Sekunden nach dem Anfahren 2 bis 5 Sekunden beträgt und insbesondere mit zunehmender Zeit seit dem Anfahren ansteigt und/oder ansteigt, bis sie einen Maximalwert erreicht von dem an sie konstant bleibt, insbesondere mindestens um den Faktor 4 und/oder mindestens 1 Sekunde ansteigt.

12. System zur Steuerung eines Räumungs- und/oder Entmistungsschiebers aufweisend mindestens einen elektrischen Antrieb, wobei das System eine Ansteuerung für den elektrischen Antrieb und eine Messvorrichtung zur Erfassung des vom elektrischen Antrieb aufgenommenen Antriebsstroms wobei das System eingerichtet ist, den Antriebsstrom zu ändern und/oder zu begrenzen, so dass der Räumungs- und/oder Entmistungsschieber gestoppt und/oder reversiert wird und/oder den Räumungs- und/oder Entmistungsschieber zu stoppen und/oder zu reversieren und/oder den elektrischen Antrieb abzuschalten, zu stoppen und/oder zu reversieren, wenn der Antriebsstrom eine erste Stromgrenze erreicht und/oder überschreitet, wobei sich die erste Stromgrenze
zu jedem Zeitpunkt in einem ersten Zeitabschnitt nach dem Anfahren durch einen ersten vorgegeben Aufschlag auf den um eine erste Zeitspanne zurückliegenden Antriebsstrom zuzüglich einem zweiten Aufschlag gegeben ist und zu jedem Zeitpunkt in einem zweiten Zeitabschnitt durch den ersten vorgegebenen Aufschlag auf den um eine zweite Zeitspanne zurückliegenden Antriebsstrom gegeben ist, **dadurch gekennzeichnet, dass** sich der zweite Aufschlag mit zunehmendem zeitlichen Abstand vom Anfahren verringert.

## Claims

1. Method for the safety shutdown of a clearing and/or dung removal slider at and after startup of the clearing and/or dung removal slider comprising at least one electrical drive unit, wherein the driving current absorbed by the electric drive unit is detected,

wherein the clearing and/or dung removal slider is stopped and/or reversed and/or the electrice drive unit is switched off, stopped and/or reversed,

when the drive current reaches and/or exceeds a first current limit,

wherein the first current limit is determined every time in a first time period after startup by a first preset impact on the drive current covering a first time span with the addition of a second impact and is determined every time in a second time period determined by the first preset impact on the drive current covering a second time span, **characterized in that** the second impact is reduced with an increasing time interval from startup and wherein the first time period is located before startup from the second time period.

2. The method of claim 1, where the first impact is a constant impact and/or decreasing with time.

3. The method according to one of the previous claims, wherein a starting time period extends between startup and the beginning of the first time period, wherein the first current limit in the starting time period is determined in particular by a constant starting current limit and/or the starting time period is at least 0.1 second and/or maximum 1.5 seconds.

4. The method according to one of the previous claims, wherein the clearing and/or dung removal slider is also stopped and/or reversed and/or the electrice drive unit is switched off, stopped and/or reversed, when the drive current reaches and/or exceeds a constant maximum current limit.

5. The method according to one of the previous claims, wherein the first impact is at least 0.3 mA per 0.1 second time span and/or maximum 300mA per 0.1 second time span and/or per 0.1 second time span at least 0.03mA and/or maximum 25% of the maximum preset drive current and/or of the maximum current of the electric drive unit and/or of the starting current limit and/or of the maximum current limit.

6. The method according to one of the previous claims, wherein the second impact is at the beginning of the time period per 0.1 second time span at least 75 mA and/or maximum 700mA and/or at least 8% and/or maximum 40% of the maximum preset drive current and/or of the maximum current of the electric drive unit and/or of the starting current limit and/or of the maximum current limit and/or at the end of the first time period per 0.1 second time span maximum 50 mA and/or maximum 2% of the maximum preset drive current and/or of the maximum current of the electric drive unit and/or of the starting current limit and/or of the maximum current limit and/or maximum 10% of the second impact at the beginning of the first time period.

7. The method according to one of the previous claims, wherein the first impact does not depend on the second impact and/or the time span and/or the time interval since startup and/or the drive current and/or the second impact does not depend on the first impact and/or the driven current.

8. The method according to one of the previous claims, wherein the first time period begins at the latest 2 seconds after startup and in particular at the earliest 0.1 second after startup and/or the second time period in particular follows the first time period immediately and/or the second time period ends at least one second and/or maximum 6 seconds after a pause and/or falling below a preset lowest speed of the clearing and/or dung removal slider and/or the first time period lasts at least one second and/or maximum 6 seconds.

9. The method according to one of the previous claims, wherein the second impact is defined by a factor decreasing with time with respect to the first impact, wherein in particular the factor is at least 3 and/or maximum 20 at the start of the first time span and/or is at least 0.9 at the end of the first time span.

10. The method according to one of the previous claims, wherein the first time span initially contains a starting time span, in which the second impact falls more strongly than by a square, in particular the second impact is according to the formula, of the same duration since startup minus a first constant, then multiplied by a second constant ranging between 6 and 10, than divided by a third constant, then added a fourth constant, wherein the first constant is 150% to 300% of the time running up to the end of the starting time span and/or the first time span has an ending time span, in particular at its end, the second impact decreases linearly from the time since startup and in particular the starting time span last at least 0.5 second and/or maximum 3 seconds.

11. The method according to one of the previous claims, wherein the first time span is at least 0.05 second and/or maximum 3 seconds and in particular increases with time since startup, is in particular at least greater than or equal to the factor 2 and/or at least 0.2 seconds and/or the second to time spanin relation to the longest first time span and/or maximum 0.1 second and/or maximum 10 seconds, in particular corresponds to 2 to 5 seconds, after maximum 10 seconds and/or at least 5 seconds after startup and in particular increases with time since startup, and/or increases until it reaches a maximum value from which it remains constant, Increases in particular by a factor 4 and/or at least 1 second.

**12.** A system for controlling a clearing and/or dung removal slider comprising at least one electrical drive unit, wherein the system comprises an actuation system for the electrical drive unit and a measuring device for determine the drive current absorbed by the electrical drive unit, wherein the system is arranged to modify and/or to limit the drive current, so that the clearing and/or dung removal slider is stopped and/or reversed and/or to stop and/or to reverse the clearing and/or dung removal slider and/or to switch off, to stop and/or to reverse the electrical drive unit, when the drive current reaches and/or exceeds a first current limit, wherein the first current limit is determined every time in a first time period after startup by a first preset impact on the drive current covering a first time span with the addition of a second impact and every time in a second time period determined by the first preset impact on the drive current covering a second time span, **characterized in that** the second impact is reduced with an increasing time interval from startup.

## Revendications

**1.** Procédé de déconnexion de sécurité d'un racleur à fumier et/ou de nettoyage, au démarrage et après le démarrage du racleur à fumier et/ou de nettoyage, comprenant au moins une unité d'entraînement électrique dans lequel le courant d'attaque absorbé par l'unité d'entraînement électrique est détecté, dans lequel le racleur à fumier et/ou de nettoyage est arrêté et/ou inversé et/ou l'unité d'entraînement électrique est éteinte, arrêtée et/ou inversée, lorsque le courant d'attaque atteint et/ou dépasse une première limite de courant,
dans lequel la première limite de courant est déterminée à chaque fois dans une première période de temps après le démarrage par un premier impact prédéfini sur le courant d'attaque recouvrant une première durée avec l'ajout d'un second impact et est déterminé à chaque fois dans une seconde période de temps déterminée par le premier impact prédéfini sur le courant d'attaque recouvrant une seconde durée, **caractérisé en ce que** le second impact est réduit avec l'accroissement de l'intervalle de temps depuis le démarrage et dans lequel la première période de temps est située avant le démarrage depuis la seconde période de temps.

**2.** Procédé selon la revendication 1, où le premier impact est un impact constant et/ou diminuant avec le temps.

**3.** Procédé selon l'une des revendications précédentes, dans lequel une période de temps de démarrage se prolonge entre le démarrage et le début de la première période de temps, dans lequel la première limite de courant dans la période de temps de démarrage est déterminée en particulier par une limite de courant de démarrage constant et/ou la période de temps de démarrage est d'au moins 0,1 seconde et/ou de 1,5 seconde maximum.

**4.** Procédé selon l'une des revendications précédentes, dans lequel le racleur à fumier et/ou de nettoyage est également arrêté et/ou inversé et/ou l'unité d'entraînement électrique est éteinte, arrêtée et/ou inversée, dans lequel le courant d'attaque atteint et/ou dépasse une limite de courant maximale constante.

**5.** Procédé selon l'une des revendications précédentes, dans lequel le premier impact est d'au moins 0,3 mA par durée de 0,1 seconde et/ou 300 mA maximum par durée de 0,1 seconde et/ou par durée de 0,1 seconde d'au moins 0,03 mA et/ou au maximum 25% du courant d'attaque préréglée maximal et/ou du courant maximal de l'unité d'entraînement électrique et/ou de la limite de courant de démarrage et/ou de la limite de courant maximale.

**6.** Procédé selon l'une des revendications précédentes, dans lequel le second impact est au début de la période de temps par durée de 0,1 seconde à au moins 75 mA et/ou maximum de 700mA et/ou au moins 8% et/ou au maximum 40% du courant d'attaque maximal prédéfini et/ou du courant maximal de l'unité d'entraînement électrique et/ou de la limite de courant de démarrage et/ou de la limite de courant maximale et/ou à la fin de la première période de temps pour une durée de 0,1 seconde, un courant maximal de 50 mA et/ou au maximum 2% du courant d'attaque maximale prédéfini et/ou du courant maximal de l'unité d'entraînement électrique et/ou de la limite de courant de démarrage et/ou de la limite de courant maximale et/ou au maximum de 10% du second impact au début de la première période de temps.

**7.** Procédé selon l'une des revendications précédentes, dans lequel le premier impact ne dépend pas du second impact et/ou la durée et/ou l'intervalle de temps depuis le démarrage et/ou le courant d'attaque et/ou le second impact ne dépend pas du premier impact et/ou du courant d'attaque.

**8.** Procédé selon l'une des revendications précédentes, dans lequel la première période de temps commence au plus tard 2 secondes après le démarrage et en particulier au plus tôt 0,1 seconde après le démarrage et/ou la seconde période de temps suit en particulier la première période de temps immédiatement et/ou la seconde période de temps se termine au moins une seconde et/ou au maximum 6 secondes après une pause et/ou tombe au-dessous d'une vitesse minimale prédéterminée du racleur à fumier et/ou de nettoyage et/ou la première période de temps dure au moins une seconde et/ou 6 secondes au maximum.

**9.** Procédé selon l'une des revendications précédentes, dans lequel le second impact est défini par un facteur qui diminue avec le temps par rapport au premier impact, dans lequel, en particulier, le facteur est d'au moins 3 et/ou 20 au maximum au début de la première durée et/ou est d'au moins 0,9 à la fin de la première durée.

**10.** Procédé selon l'une des revendications précédentes, dans lequel la première durée contient initialement une durée de démarrage, dans lequel le second impact chute plus vite que du carré, en particulier le second impact est conforme à la formule, de la même durée depuis le démarrage moins une première constante, puis multiplié par une deuxième constante comprise entre 6 et 10, puis divisé par une troisième constante, avant l'ajout d'une quatrième constante, dans lequel la première constante est de 150% à 300% du temps s'écoulant jusqu'à la fin de la durée de démarrage et/ou la première durée présente une durée de fin, en particulier à sa fin, le second impact baisse linéairement à partir du démarrage et en particulier la durée de démarrage dure au moins 0,5 seconde et/ou 3 secondes au maximum.

**11.** Procédé selon l'une des revendications précédentes, dans lequel la première durée est d'au moins 0,05 seconde et/ou de 3 secondes au maximum et en particulier augmente avec le temps depuis le démarrage, est en particulier au moins supérieure ou égale au facteur 2 et/ou au moins 0,2 seconde et/ou à la seconde à la durée par rapport à la première durée et/ou de 0,1 seconde au maximum et/ou de 10 secondes au maximum, en particulier, correspond à 2 à 5 secondes, après un maximum de 10 secondes et/ou au moins 5 secondes après le démarrage et en particulier augmente avec le temps depuis le démarrage, et/ou augmente jusqu'à qu'atteindre une valeur maximale à partir de laquelle elle reste constante, augmente en particulier d'un facteur 4 et/ou d'au moins 1 seconde.

**12.** Système de commande d'un racleur à fumier et/ou de nettoyage, comprenant au moins une unité d'entraînement électrique, dans lequel le système comprend un système d'actionnement de l'unité d'entraînement électrique et un dispositif de mesure pour déterminer le courant d'attaque absorbé par l'unité d'entraînement électrique, dans lequel le système est disposé pour modifier et/ou pour limiter le courant d'attaque, de sorte que le racleur à fumier et/ou de nettoyage est arrêté et/ou inversé et/ou pour arrêter et/ou inverser le racleur à fumier et/ou de nettoyage et/ou désactiver et/ou arrêter et/ou inverser l'unité d'entraînement électrique, lorsque le courant de l'entraînement atteint et/ou dépasse une première limite de courant, dans lequel la première limite de courant est déterminée à chaque fois dans une première période de temps après le démarrage par un premier impact prédéfini sur le courant d'attaque recouvrant une première durée avec l'ajout d'un second impact et chaque durée dans une seconde période de temps déterminée par le premier impact prédéfini du courant d'attaque recouvrant une seconde période de temps, **caractérisé en ce que** le second impact baisse avec l'accroissement de l'intervalle de temps depuis le démarrage.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1557082 A1
- CA 2033427 C
- DE 2018340 A1
- WO 2008003534 A1
- EP 0850817 A1